## Europäisches Patentamt

## European Patent Office

## Office européen des brevets

(19)

(11) Veröffentlichungsnummer: **0 230 895**
**B1**

(12)

# EUROPÄISCHE PATENTSCHRIFT

(45) Veröffentlichungstag der Patentschrift:
28.11.90

(51) Int. Cl.⁵: **C01B 21/14**

(21) Anmeldenummer: **87100305.9**

(22) Anmeldetag: **13.01.87**

(54) **Verfahren zur Herstellung von hydroxylamin-O-sulfonsäure.**

(30) Priorität: **17.01.86 DE 3601217**

(43) Veröffentlichungstag der Anmeldung:
**05.08.87 Patentblatt 87/32**

(45) Bekanntmachung des Hinweises auf die Patenterteilung:
**28.11.90 Patentblatt 90/48**

(84) Benannte Vertragsstaaten:
**BE CH DE FR GB IT LI NL**

(56) Entgegenhaltungen:
**DE-A- 1 667 513**

**PATENT ABSTRACTS OF JAPAN, vol. 6,
no. 35 (C-93)[913], 3rd March 1982; & JP - A
- 56 155 008 (UBE KOSAN K.K.) 01.12.1981
INORGANIC SYNTHESES, vol. 5, 1957, pages 122-124,
New York, US; H.J. MATSUGUMA et al.:
"Hydroxylamine-o-sulfonic acid"**

(73) Patentinhaber: **BASF Aktiengesellschaft,
Carl-Bosch-Strasse 38, D-6700 Ludwigshafen(DE)**

(72) Erfinder: **Fuchs, Hugo, Dr., Egellstrasse 28,
D-6700 Ludwigshafen(DE)**
Erfinder: **Weiss, Franz-Josef, Dr., Schilfweg 1,
D-6708 Neuhofen(DE)**
Erfinder: **Thomas, Erwin, Borngasse 12,
D-6713 Freinsheim(DE)**
Erfinder: **Ritz, Josef, Dr., Osloerweg 8,
D-6700 Ludwigshafen(DE)**

**Beschreibung**

Gegenstand der Erfindung ist ein Verfahren zur Herstellung von Hydroxylamin-O-sulfonsäure durch Umsetzen von Hydroxylammoniumsulfat mit Oleum.

Aus der Zeitschrift für anorganische und allgemeine Chemie, Band 147 (1925), Seiten 143 ff, ist ein Verfahren zur Herstellung von Hydroxyl-amin-O-sulfonsäure durch Umsetzen von Hydroxylammoniumsulfat mit Chlorsulfonsäure bekannt. Dieses Verfahren ist insofern nachteilig, als Chlorsulfonsäure eine aufwendige Chemikalie ist und zudem als Nebenprodukt Chlorwasserstoff entsteht, der entsorgt werden muß. Nach einem anderen in Chemische Berichte, Band 92 (1959), Seite 2526, beschriebenen Verfahren erhält man Hydroxylamin-O-sulfonsäure durch Umsetzen von Hydroxylammoniumsulfat mit Oleum. Nach Abtrennen der Schwefelsäure verbleiben jedoch in diesem noch beträchtliche Mengen an Hydroxylamin-O-sulfonsäure, die nicht zurückgewonnen werden. Zudem muß die so verunreinigte Schwefelsäure entsorgt werden.

Es war deshalb die technische Aufgabe gestellt, die Herstellung von Hydroxylamin-O-sulfonsäure so zu gestalten, daß keine lästigen Nebenprodukte entstehen, die entsorgt werden müssen, und zudem die bisher nicht zurückgewinnbare Hydroxylamin-O-sulfonsäure nutzbar gemacht wird.

Diese Aufgabe wird gelöst in einem Verfahren zur Herstellung von Hydroxylamin-O-sulfonsäure durch Umsetzen von Hydroxylammoniumsulfat mit Oleum bei erhöhter Temperatur, dadurch gekennzeichnet, daß man

a) Hydroxylammoniumsulfat mit Oleum bei erhöhter Temperatur umsetzt,
b) Schwefelsäure von der gebildeten Hydroxylamin-O-sulfonsäure abtrennt,
c) die abgetrennte, noch Hydroxylamin-O-sulfonsäure enthaltende Schwefelsäure mit Wasser auf 2 bis 6 normal verdünnt und 1 bis 10 Stunden auf 30 bis 80°C erwärmt.
d) Hydroxylammoniumsulfat durch katalytische Reduktion von Stickstoffmonoxid mit Wasserstoff unter Verwendung der verdünnten Schwefelsäure aus Stufe (c) in Gegenwart von suspendierten Platinträgerkatalysatoren bei erhöhter Temperatur herstellt.

Das neue Verfahren hat den Vorteil, daß keine lästigen Nebenprodukte, wie Chlorwasserstoffsäure oder verunreinigte Schwefelsäure entsorgt werden müssen. Zudem hat das neue Verfahren den Vorteil, daß auch die in der Schwefelsäure gelöste Hydroxylamin-O-sulfonsäure nutzbringend verwendet wird.

Das neue Verfahren ist insofern bemerkenswert, als bei der bekannt empfindlichen katalytischen Reduktion von Stickstoffmonoxid mit Wasserstoff zu Hydroxylammoniumsulfat der Gehalt an Hydroxylamin-O-sulfonsäure in der mitverwendeten Schwefelsäure keinen negativen Einfluß hat.

Als Ausgangsstoff verwendet man festes Hydroxylammoniumsulfat. Vorteilhaft hat das verwendete Hydroxylammoniumsulfat einen Wassergehalt < 1 Gew.%. Die Teilchengröße des Hydroxylammoniumsulfats beträgt vorteilhaft 0,5 bis 2 mm. Das zur Umsetzung verwendete Oleum hat vorteilhaft einen Gehalt von 24 bis 35 Gew.% $SO_3$. In der Regel verwendet man je Gewichtsteil Hydroxylammoniumsulfat 3 bis 6 Gewichtsteile Oleum. Vorteilhaft führt man die Umsetzung bei einer Temperatur von 90 bis 140°C, insbesondere von 100 bis 130°C durch. Nach beendeter Reaktion wird das Reaktionsgemisch zweckmäßig auf Zimmertemperatur, z.B. von 15 bis 25°C, abgekühlt.

In der nächsten Stufe (b) wird die aus dem Reaktionsgemisch ausgeschiedene Hydroxylamin-O-sulfonsäure von der restlichen Schwefelsäure getrennt. Dies erfolgt zweckmäßig nach bekannten Methoden, z.B. durch Abzentrifugieren oder durch Absaugen. Die so gewonnene Hydroxylamin-O-sulfonsäure wird vorteilhaft mit Eisessig gewaschen und im Vakuum getrocknet. Die verbleibende, als Filtrat erhaltene Schwefelsäure enthält in der Regel noch 0,5 bis 5 Gew.% Hydroxylamin-O-sulfonsäure.

In der nachfolgenden Stufe (c) wird die in (b) anfallende Hydroxylamin-O-sulfonsäure enthaltende Schwefelsäure mit Wasser auf 2 bis 6 normal, insbesondere 3 bis 4,5 normal verdünnt und für 1 bis 10 Stunden auf 30 bis 80°C erwärmt. Hierbei wird die Hydroxylamin-O-sulfonsäure zu Hydroxylammoniumhydrogensulfat hydrolysiert.

Die in der Stufe (c) erhaltene verdünnte Schwefelsäure, die noch Spuren Hydroxylamin-O-sulfonsäure enthält, wird zur Herstellung von Hydroxylammoniumsulfat verwendet. Hierbei wird Stickstoffmonoxid mit Wasserstoff katalytisch reduziert. In der Regel wendet man Wasserstoff und Stickstoffmonoxid im Molverhältnis von 1,5 : 1 bis 6 : 1 an. Als Mineralsäure wird die aus der Stufe (c) erhaltene verdünnte Schwefelsäure, die zusätzlich Spuren Hydroxylamin-O-sulfonsäure enthält, gegebenenfalls zusammen mit weiterer 4 bis 6 normaler wäßriger Schwefelsäure verwendet und man läßt im Verlauf der Reaktion die Säurekonzentration abfallen, z.B. bis auf 0,2 normal.

Die Umsetzung führt man vorteilhaft bei Temperaturen von 30 bis 60°C unter Atmosphärendruck oder erhöhtem Druck, z.B. bis zu 300 bar durch.

Als Edelmentallkatalysatorne verwendet man vorteilhaft Platinkatalysatoren, die imallgemeinen auf Träger aufgebracht verwendet werden. Besonders bewährt hat sich Platin auf Kohhleträger, insbesondere auf Graphit. Die Katalysatoren werden in feinverteilter Form als Suspension angewandt. Vorzugsweise hat ein solcher Katalysator einen Gehalt von 0.2 bis 4,0 Gew.% Platin. Vorteilhaft enthalten die katalysatoren zusätzlich ein oder mahrere Elemente der 5. und/oder 6. Gruppe des periodischen Systems mit einem Atomgewicht >31, wie z.B. Blei und/oder Quecksilber.

Zweckmäßig wird aus der so erhaltenen wäßrigen Lösung von Hydroxylammoniumsulfat kristallines Hydroxylammoniumsulfat durch Eindampfen der wäßrigen Lösung unter vermindertem Druck gewonnen und wieder der Stufe (a) zugeführt.

Hydroxylamin-O-sulfonsäure, das nach dem Verfahren der Erfindung erhältlich ist, eignet sich zur Umsetzung von Carbonylverbindungen, zur Herstellung von Hydrazinen und als Polymerisationskatalysator.

Das Verfahren nach der Erfindung sei an folgendem Beispiel veranschaulicht:

Herstellung von Hydroxylamin-O-sulfonsäure

In einen 1 l 4-Halskolben, ausgestattet mit einem Rührer, Thermometer, einem Tropftrichter sowie einer Feststoffdosierschnecke werden 50 g Oleum 27 % (m/m) vorgelegt und innerhalb von 20 Minuten 940 g Oleum 27 % (m/m) sowie 250 g festes Hydroxylammoniumsulfat unter Rühren gleichzeitig zudosiert. Die Temperatur wird bei ca. 110°C gehalten. Nach Zugabe der Reaktionskomponenten wird 1 Stunde bei dieser Temperatur nachgerührt. Anschließend läßt man das Reaktionsgemisch auf Zimmertemperatur abkühlen und entfernt die überschüssige Schwefelsäure durch Abschleudern auf einer Zentrifuge. Hierbei erhält man 337 g einer Rohsäure mit einem Hydroxylamin-O-sulfonsäuregehalt von 90,3 %.

Durch Waschen mit 750 ml Eisessig erhält man 298 g einer 99,9%igen Säure. Die Säure wird unter sorgfältig getrocknetem Stickstoff aufbewahrt.

Die bei der Herstellung der Rohsäure anfallende Schwefelsäure enthält noch ca. 13 g Hydroxylamin-O-sulfonsäure. Diese wird aud einen Schwefelsäuregehalt von 20 % (m/m) mit Wasser verdünnt und 3 Stunden bei einer Temperatur von 50°C gehalten. Die Hydroxylamin-O-sulfonsäure wird hierbei wieder zu Hydroxylammoniumhydrogensulfat hydrolysiert. Diese wird nun bei der Hydroxylaminsynthese nach dem katalytischen NO-Hydrierungsverfahren eingesetzt. Die Raumzeitausbeute sowie die Selektivität der Hydroxylamin-Synthese unterscheidet sich nicht durch die Verwendung der Schwefelsäure aus der Hydroxylamin-O-sulfonsäure-Herstellung von der Synthese bei Verwendung reiner Schwefelsäure, wie der folgenden Werte zeigen:

| | $NH_2OH$ Ausbeute mol % | RZA[*] mol NO/l RR·h[**] |
|---|---|---|
| Verwendung reiner Schwefelsäure | 89,7 | 0,40 |
| Verwendung der Schwefelsäure aus der Hydroxylamin-O-sulfon-säure-Herstellung | 91,2 | 0,39 |

[*] Raum/Zeit-Ausbeute
[**] Reaktionsraum

**Patentansprüche**

1. Verfahren zur Herstellung von Hydroxylamin-O-sulfonsäure durch Umsetzen von Hydroxylammoniumsulfat mit Oleum, dadurch gekennzeichnet, daß man
   a) Hydroxylammoniumsulfat mit Oleum bei erhöter Temperatur umsetzt,
   b) Schwefelsäure von der gebildeten Hydroxylamin-O-sulfonsäure abtrennt,
   c) die noch Hydroxylamin-O-sulfonsäure enthaltende in Stufe (b) anfallende Schwefelsäure mit Wasser auf 2 bis 6 normal verdünnt und 1 bis 10 Stunden auf 30 bis 80°C erwärmt
   d) Hydroxylammoniumsulfat durch katalytische Reduktion von Stickstoffmonoxid mit Wasserstoff unter Verwendung der verdünnten Schwefelsäure aus Stufe (c) in Gegenwart von Edelmetallkatalysatoren bei erhöter Temperatur herstellt.

2. Verfahren nach Anspruch 1, dadurch gekennzeichnet, daß man das erzeugte Hydroxylammoniumsulfat wiederum in Stufe (a) zur Herstellung von Hydroxylamin-O-sulfonsäure verwendet.

## Claims

1. Process for preparing hydroxylamine-O-sulfonic acid by reacting hydroxylammonium sulfate with oleum, which comprises

a) reacting hydroxylammonium sulfate with oleum at elevated temperatures,

b) isolating sulfuric acid from the hydroxylamine-O-sulfonic acid formed,

c) diluting the sulfuric acid which was obtained in stage (b) and which still contains hydroxylamine-O-sulfonic acid with water to 2–6 N and heating it at 30–80°C for 1–10 hours,

d) preparing hydroxylammonium sulfate by catalytic reduction of nitrogen monoxide with hydrogen using the dilute sulfuric acid from stage (c) in the presence of a noble metal catalyst at elevated temperatures.

2. A process as claimed in claim 1, wherein the hydroxylammonium sulfate produced is in turn used in stage (a) for preparing hydroxylamine-O-sulfonic acid.

## Revendications

1. Procédé de préparation de l'acide hydroxylamine-O-sulfonique par la réaction du sulfate d'hydroxylammonium avec l'Oléum, caractérisé en ce que

a) on fait réagir le sulfate d'hydroxylammonium avec l'Oléum à température élevée,

b) on sépare l'acide sulfurique de l'acide hydroxylamine-O-sulfonique formé,

c) on dilue l'acide sulfurique obtenu à l'étape (b) et contenant encore de l'acide hydroxylamine-O-sulfonique avec de l'eau jusqu'à une normalité de 2 à 6 et on le chauffe pendant 1 à 10 heures à une température de 30 à 80°C,

d) on prépare le sulfate d'hydroxylammonium par la réduction catalytique du monoxyde d'azote avec l'hydrogène, à température élevée, en présence de catalyseurs à base de métaux nobles et en utilisant l'acide sulfurique dilué de l'étape (c).

2. Procédé selon la revendication 1, caractérisé en ce que l'on réutilise le sulfate d'hydroxylammonium obtenu dans l'étape (a) pour la préparation de l'acide hydroxylamine-O-sulfonique.